# EUROPÄISCHE PATENTSCHRIFT

(11) **EP 2 335 314 B1**
(45) Veröffentlichungstag und Bekanntmachung des Hinweises auf die Patenterteilung: **11.04.2018**
(21) Anmeldenummer: 09783361.0
(22) Anmeldetag: 24.09.2009
(51) Int. Cl.: H01M 8/12, H01M 8/02

(54) **PLANARE HOCHTEMPERATUR-BRENNSTOFFZELLE**
PLANAR HIGH-TEMPERATURE FUEL CELL
PILE À COMBUSTIBLE PLANE À HAUTE TEMPÉRATURE

(30) Priorität: 30.09.2008 DE 102008049712
(43) Veröffentlichungstag der Anmeldung: 22.06.2011
(73) Patentinhaber: Siemens Aktiengesellschaft, 80333 München (DE)
(72) Erfinder: FLECK, Robert, 91325 Adelsdorf (DE); GREINER, Horst, 91301 Forchheim (DE); ZAMPIERI, Alessandro, 91052 Erlangen (DE)
(86) Internationale Anmeldenummer: PCT/EP2009/062366
(87) Internationale Veröffentlichungsnummer: WO 2010/037681

(56) Entgegenhaltungen:
- EP-A- 0 424 732
- EP-A- 1 263 067
- WO-A-2007/095658
- WO-A-2008/138787
- WO-A2-2006/082057
- DE-A1-102006 045 086
- DE-A1-102006 056 251
- GB-A- 2 434 691
- US-A1- 2002 048 699
- US-A1- 2002 177 026

## Beschreibung

Die Erfindung bezieht sich auf eine planare Hochtemperatur-Brennstoffzelle gemäß dem Oberbegriff des Patentanspruchs 1. Daneben bezieht sich die Erfindung auf eine Verwendung solcher Brennstoffzellen in einer damit aufgebauten Brennstoffzellenanlage.

Festelektrolyt-Hochtemperatur-Brennstoffzellen sind im Wesentlichen gekennzeichnet durch einen keramischen Festelektrolyten, der im Allgemeinen als oxidkeramische Schicht zwischen zwei Elektroden ausgebildet ist. Eine derartige Brennstoffzelle (SOFC = Solid Oxide Fuel Cell) hat im Allgemeinen eine Betriebstemperatur von 600°C - 1000°C. Bei dieser Temperatur ist die elektrochemische Umsetzung optimiert. Niedrige Betriebstemperaturen senken die Kosten einer Brennstoffzellenanlage tendenziell ab.

Im Leistungsbereich > 100 kW werden weltweit bisher im Wesentlichen Hochtemperatur-Brennstoffzellen-Anlagen (SOFC) mit einem tubularen Design betrieben. Die zugehörigen Zellen sind vollkeramisch aufgebaut, wobei die verschiedenen Funktionsschichten auf einen keramischen Träger aufgebracht werden. Der Träger befindet sich auf der Luftseite einer Zelle und besteht aus Kathodenmaterial. Das Potential derartiger Brennstoffzellen ist an verschiedenen Stellen in der Öffentlichkeit vorgestellt worden, z. B. mit der Veröffentlichung "Fuel Cells Systems: Towards Commerzialition" in Power Journal 2001, pp. 10-13 (Herausgeber: Siemens AG).

Eine Alternative zur tubularen Brennstoffzelle ist die planaren Brennstoffzelle mit einem planaren Schichtaufbau. Planare SOFC werden beispielsweise in der Veröffentlichung VIK-Berichte "Brennstoffzellen", Nr. 214 (Nov. 1999), S. 49 ff. beschrieben.

Die hohen Betriebstemperaturen, die für eine vollkeramische Zelle notwendig sind, werden bewusst in Kauf genommen, da auf der anderen Seite extrem niedrige Degradationswerte bei diesen Anlagen erreicht werden können, welche unterhalb von 0,1 % im für die Beurteilung von Brennstoffzellen maßgeblichen 1000 h-Betrieb liegen.
Bei vollkeramischen Brennstoffzellen können Probleme bei der Herstellung des Kathodenträgers auftreten. Inhomogenitäten im Rohr erhöhen die Bruchwahrscheinlichkeit des Trägers und beeinflussen damit die Fertigungsausbringung. Des Weiteren ergeben sich bei vollkeramischen Zellen wegen der Vielzahl der Fertigungsschritte erhöhte Fertigungstoleranzen, die möglicherweise ebenfalls die Verwendbarkeit einschränken.
In der Fachwelt ist bereits diskutiert worden, dass Brennstoffzellen, die bei niedrigen oder mittleren Temperaturen arbeiten, eine Reihe von neuen Möglichkeiten beinhalten. Dies betrifft insbesondere die Materialwahl bei den Zellen und der Peripherie. Niedrige Arbeitstemperaturen von ca. 600°C erlauben nämlich die Verwendung von hochlegierten Edelstählen und/oder anderen Metalllegierungen im einzelnen Brennstoffzellen-Modul und in deren Peripherie.

Davon ausgehend ist es Aufgabe der Erfindung, eine neue planare Brennstoffzelle mit keramischem Elektrolyten vorzuschlagen, die die Möglichkeit einer verringerten Arbeitstemperatur gibt.
Die Aufgabe ist erfindungsgemäß durch eine Brennstoffzelle gemäß dem Patentanspruch 1 gelöst. Die Verwendung einer Hintereinanderschaltung solcher Brennstoffzellen zum Aufbau einer entsprechenden Brennstoffzellenanlage ist Gegenstand des Patentanspruches 10. Weiterbildungen sind in den abhängigen Ansprüchen angegeben.
Wesentlicher Gegenstand der neuen festkeramischen Brennstoffzelle ist, dass auf der Kathodenseite ein poröser metallischer Träger für die Funktionsschichten (Kathode, Elektrolyt, Anode) vorhanden ist. Mit solchen metallischen Trägern können derartige Brennstoffzellen im Bereich von 400°C bis 800°C, vorteilhafterweise bei 600°C, betrieben werden. Bei solchen Temperaturen ergeben sich erheblich geringere Anforderungen an den Aufbau der Peripherie, aber auch an den Aufbau der Brennstoffzelle selbst. Aufgrund der Reduzierung der Temperatur können sich die Herstellungskosten verringern lassen, wobei bessere mechanische Eigenschaften der Zellen erreicht werden und wobei die Möglichkeit einer besseren Verfahrenskontrolle gegeben ist. Dies gilt insbesondere auch für die Herstellung der Elektroden und/oder des Elektrolyten als Funktionsschichten auf dem metallischen Träger.

Die Lebensdauer einer solchen Brennstoffzelle wird durch die Verwendung eines metallischen Trägers kaum beeinflusst. Die Wandstärke des metallischen Trägers kann gegenüber der keramischen Ausführung erheblich verringert werden. Dadurch werden auch die Polarisationswiderstände, die die Sauerstoffdiffusion beeinflussen, auf der Kathodenseite geringer. Des Weiteren sind hochlegierte Edelstahlpulver deutlich kostengünstiger als keramische Kathodenpulver (LSM bzw. LCM).

Insgesamt ergibt sich dadurch eine signifikante Kosteneinsparung bei mindestens gleichwertiger elektrochemische Performance der gesamten Zelle.

Der neue poröse metallische Träger für die Funktionsschichten kann mit üblichen pulvermetallurgischen Herstellverfahren hergestellt werden. Diese sind im Vergleich zu keramischen Fertigungsprozessen eher kostengünstiger.

Vom Stand der Technik, insbesondere der Veröffentlichung N. P. Branden et al. in "Journal of Materials Engineering and Performance" 13 (2004), Seiten 253 bis 256, ist speziell der Aufbau einer Brennstoffzelle mit einem metallischen Träger auf der Anodenseite bekannt. Weiterhin sind Brenstoffzellen bzw. elektrochemische Zellen in US 2002/0048699 A1, WO 2006/082057 A2 und DE 10 2006 045 086 A1 beschrieben.

Metallische Trägerstrukturen auf der Anodenseite einer Brennstoffzelle sind weiterhin aus dem Stand der Technik bekannt, etwa aus den WO 2007/095658 A2, US 2002/0177026A1, DE 10 2006 056251 A1, WO 2008 138787 A1 und GB 2434691 A. Poröse Metallstrukturen als Stromsammler auf der Anodenseite einer Brennstoffzelle sind auch aus der EP 1 263 067 A2 und der EP 0 424 732 A1 bekannt.

Ein wesentlicher Vorteil der vorliegenden Erfindung mit dem Metallsubstrat auf der Kathodenseite besteht jedoch darin, dass der Bahnwiderstand auf der Kathodenseite dadurch vernachlässigbar niedrig gehalten werden kann. Dies ist eine der Schwachstellen bei allen SOFC mit anodenseitig gestütztem, tubularem Zelldesign. Dort müssen die Elektronen z. B. mit Silberdraht auf der Kathode verteilt werden.

Bei der Verwendung von porösen Metallen auf der Kathodenseite muss zwar beachtet werden, dass die Chromoxiddeckschichten die sich auf der Oberfläche der Chrom-haltigen Metallstrukturen bilden, relativ schlecht leitend sind und das von diesen Oberflächen flüchtige Chromverbindungen abdampfen, die die elektrochemischen Eigenschaften der Kathode negativ beeinflussen können. Diesen Eigenschaften wird bei der Erfindung dadurch Rechnung getragen, indem spezielle Legierungen ausgewählt werden, die ein besonders langsames Wachstum der Chromoxiddeckschicht zeigen (z. B Plansee Werkstoff IT11). Da der ohmsche Widerstand abhängig von der Schichtdicke ist, kann hier ein sehr kleiner Spannungsabfall über die Oxidschicht erwartet werden. Die Chromabdampfung ist als thermisch aktivierter Prozess zudem stark temperaturabhängig und wird dabei bei abgesenkter Betriebstemperatur deutlich verringert. Für den Fall, dass die Abdampfraten noch weiter abgesenkt werden müssen, kann der Träger mit entsprechenden Sperrschichten versehen werden.

Als geeignete Materialien für einen Einsatz als Kathoden-Substrat-Träger bei der erfindungsgemäßen SOFC sind vom Stand der Technik bekannte Sintermetalle, beispielsweise auf der Basis von hochlegierten, ferritischen Edelstählen mit hohen Chromgehalten. Insbesondere erscheinen Werkstofftypen, die in der Fachwelt als CROFER22APU (Thyssen Krupp) oder IT11-IT14-ITM26 (Plansee) oder ZMG32 (Hitachi) bekannt sind, geeignet.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen.

Es zeigen in grobschematischer Darstellung
- Figur 1: eine perspektivische Darstellung einer planaren Brennstoffzelle,
- Figur 2: als Schnitt die Schichtfolge der Funktionsschichten auf einem metallischen Substrat und
- Figur 3: die poröse metallische Trägerstruktur als Grundlage für das Beschichten mit den Funktionsschichten.

Gleiche Teile werden in den Figuren mit jeweils sich entsprechenden Bezugszeichen versehen. Die Figuren werden teilweise gemeinsam beschrieben.

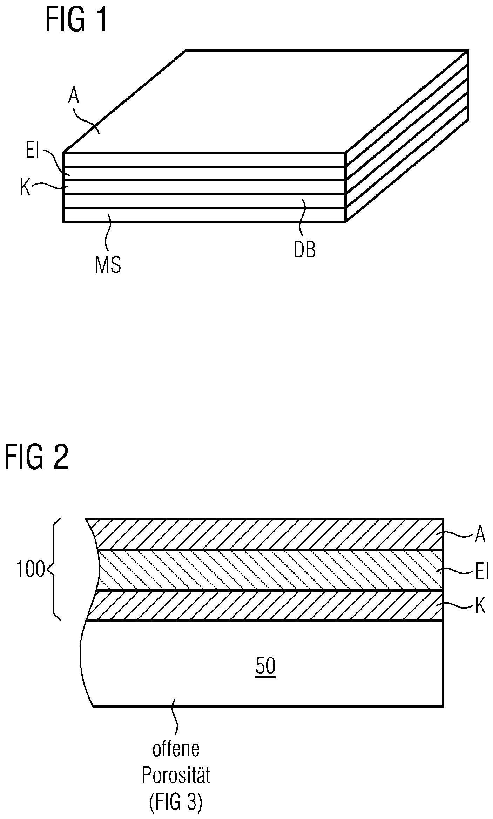

Figur 1 zeigt eine perspektivische Darstellung einer planaren Brennstoffzelle und Figur 2 einen zugehörigen Schnitt. Dabei stellt 5 den metallischen Träger aus einem gesinterten Material dar, das eine vorgegebene Porosität hat, wobei auf der oberen Seite der Trägerstruktur Funktionsschichten für die SOFC aufgebracht sind. Die Funktionsschichten bestehen im Einzelnen aus der Kathode K, dem Festelektrolyten E1 und der Anode A. Der Schichtaufbau ist insgesamt mit 100 bezeichnet. Beim Schichtaufbau 100 ist im Einzelnen ist der Festelektrolyt El bekannter Zusammensetzung als dünne Schicht zwischen Kathode K und Anode A angeordnet. Die schichtartigen Elektroden einerseits und der schichtartige Festelektrolyt andererseits können aus Teilschichten mit dazwischen liegenden Anpassungsschichten ausgebildet sein, wobei hierzu auf den Stand der Technik verwiesen wird.
In Figur 1 kann zwischen der Trägerstruktur 50 und den Funktionsschichten eine weitere Schicht DB als Diffusionsbarriere angeordnet werden, auf die weiter unten noch eingegangen wird. Der Elektrolyt besteht aus zwei Schichten. Bekannt sind hierzu vom Stand der Technik so genannte ScSz- mit GDC-Schichten oder YSz- mit GDC-Schichten. Solche Zirkonium-basierte Elektrolyten an der Oberseite und GDC an der Unterseite in Kontakt mit der Kathode bzw. umgekehrt haben sich beim Stand der Technik als geeignet erwiesen.

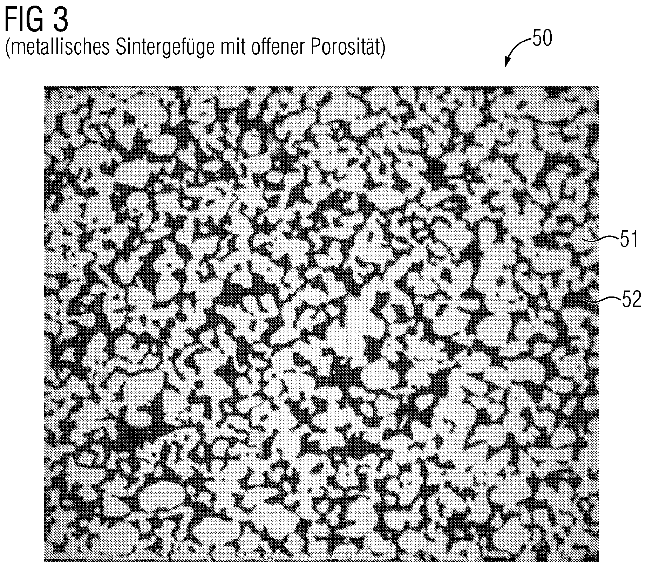

Zum Aufbau einer Brennstoffzellenanlage werden die anhand von Figur 1 beschriebenen Elementarbrennstoffzellen zu einem Stack geschichtet, die in diesem Fall insbesondere elektrisch hintereinander geschaltet sind.
Als Materialien für den porösen metallischen Träger unterschiedlichster Materialien in Frage: Ein gesinterter Edelstahl der Bezeichnung CroFer22APU oder aber eine Titan-Niob-Legierung mit hohen Chromanteilen (17 %) erscheinen geeignet. Dabei muss allerdings dafür Sorge getragen werden, dass das Chrom nicht verdampft und unter Umständen die Kathode und damit die Brennstoffzelle vergiftet. Hierzu sind geeignete Maßnahmen vorzusehen, die weiter unten beschrieben werden. Anhand Figur 2 wurde die Schichtenfolge verdeutlicht. Wesentlich ist die poröse metallische Struktur 50 als Träger der Funktionsschichten 100. Ein Schliff einer solchen Struktur 50 zeigt Figur 3, welche abwechselnd metallische Teilchen 51 und Poren 52 zeigen. Die Vergrößerung ist hier aus der Bemaßung erkennbar. Der Schliff ist so angeätzt, dass sich die Teilchen als helle Bereiche ergeben. Deutlich erkennbar ist also die offene Porosität des sintermetallischen Werkstoffes, die einen hinreichenden Durchlass für Reaktanten bzw. Reaktionsprodukte gewährleistet. Die Porosität ist dabei > 5 %, beispielsweise etwa 10 %.

Die vorstehend beschriebenen Strukturen haben gegenüber den vollkeramisch aufgebauten Strukturen beachtliche Vorteile. Wesentlich ist, dass die metallischen Substrate niedrigere Arbeitstemperaturen zulassen als die keramisch aufgebauten Brennstoffzellen. Damit verbunden sind auch niedrigere Temperaturen in den Einheiten der Brennstoffzellen-Peripherie. Diese Eigenschaften sind zwar prinzipiell bekannt. Nicht bekannt ist allerdings die Verwendung eines porösen metallischen Trägers für die Funktionsschichten auf der Luftseite. Dabei kann der metallische Träger gegebenenfalls auch mit weiteren Schichten beschichtet werden, um das Eindringen von Cr in die Kathode zu behindern. Zwischen dem Substrat und der Kathode ist eine Diffusionssperrschicht aufgetragen. Die Diffusionssperrschicht kann sein:
- (A) Ein dünner und dichter Film auf der inneren und äußeren Oberfläche des Metallsubstrats. Mögliche Herstellungsverfahren dafür sind z. B. CVD, Dip-Coating oder eine galvanische Behandlung (nicht erfindungsgemä)
- (B) Eine poröse Schicht aus LaCrO₃ auf der äußeren Oberfläche des Metallsubstrates. Mögliche Herstellungsverfahren sind z. B. Plasma-Spraying, LPPS, APS oder Wet-Powder Spraying mit nachfolgender thermischer Behandlung.

Bei Alternative (A) werden die Cr-Verdampfung und die Cr-Feststoffdiffusion behindert, und damit die mögliche Degradation der Kathode reduziert. Bei Alternative (B) wird vor allem die Feststoffdiffusion von Cr behindert.

Die Herstellung einer metallischen Kathoden-Substrat-Zelle kann beispielsweise folgendermaßen erfolgen.
- Herstellung eines metallischen Kathodensubstratträgers z. B. durch Extrusion oder sog. Tape-Casting.
- Falls erforderlich, erfolgt eine Beschichtung des Trägers mit einer Cr- Diffusionssperrschicht z. B. mittels CVD. Sofern der Trägerwerkstoff Aluminium enthält, entsteht während des Sintervorgangs "in situ" eine AL₂O₃-Diffusionsschutzschicht.
- Als Kathodenwerkstoffe können in bekannter Weise z. B. LSF, LSCF, LSC, Nickellate oder Mischoxide (LSM/YSZ, ScSZ, GCO) mittels PVD oder Plasmaspritzverfahren aufgetragen werden. Hierzu wird auf die einschlägige Fachliteratur verwiesen. Im vorliegenden Fall sollen Wärmenachbehandlungen über 800°C vermieden werden.
- Der Elektrolyt wird in einem Verfahren, welches direkt dichte Schichten liefert, aufgetragen. Hier kommen APS-, LPPS- und PVD-Techniken in Betracht. Der Elektrolyt wird aus folgenden Materialien hergestellt: YSZ, ScSZ um z. B. Grenzflächenreaktionen mit der Kathode und Anode zu verhindern.
- Als Anode kommen Ni- und/oder Cu-basierte Cermets in Betracht die mit vorstehend genannten Verfahren aufgebracht werden.
- Der Interkonnektor kann entweder als keramische Schicht auf das Metallsubstrat aufgebracht werden, wobei die vorstehend genannten Verfahren eingesetzt werden können. Alternativ werden die relevanten Oberflächenbereiche des Substrats werden mit einem Metalllot versiegelt.

Die poröse Metallschicht 50 besteht aus gesinterten Metallteilchen, wie sie oben bereits anhand Figur 3 beschrieben wurden. Insbesondere kommen dafür Edelstähle in Frage. Da sich Edelstähle mit vergleichsweise hohem Chromgehalt als geeignet für die Trägerschicht erwiesen haben, muss allerdings dafür Sorge getragen werden, dass beim Betrieb der Brennstoffzelle auch bei der niedrigen Arbeitstemperatur wenig Chrom verdampft.

Bei der vorstehend beschriebenen planaren Hochtemperatur-Brennstoffzelle (SOFC) ist wesentlich, dass der Träger für die Funktionsschichten eine poröse Metallstruktur auf der Luftseite (Kathodenseite) der Brennstoffzelle ist. Dafür kommen Sintermetalle auf der Basis von Edelstählen in Frage. Die Funktionsschichten lassen sich darauf beispielsweise mittels PVD-Verfahren, gegebenenfalls Magnetronsputtern, aufbringen.

## Patentansprüche

1. Planare Hochtemperatur-Brennstoffzelle mit Festelektrolyten, wobei die Brennstoffzelle aus Kathode und Anode als Elektroden mit der dazwischen liegenden Festelektrolytschicht besteht,
**dadurch gekennzeichnet, dass**
als Träger für die Funktionsschichten (K, E, A, 100) eine poröse Metallstruktur (50) auf der Kathodenseite verwendet wird, wobei die poröse Metallstruktur (50) und die Funktionsschichten (K, E, A, 100) planar ausgebildet sind und der Festelektrolyt (E) aus zwei Schichten mit unterschiedlichen Materialien besteht, und wobei der Festelektrolyt (E) aus ScSz und YSz besteht,
**dadurch gekennzeichnet, dass** auf dem porösen Metallträger (50) eine diffusionsbegrenzende Schicht aus LaCrO₃ und dass darauf die Kathode (K), Elektrolyt (E) und die Anode (A) als Funktionsschichten aufgebracht sind.

2. Brennstoffzelle nach einem der vorhergehenden Ansprüche, **dadurch gekennzeichnet, dass** die poröse Struktur (50) des metallischen Trägers durchlässig für die Diffusion der Reaktanten bzw. Reaktionsprodukte ist.

3. Brennstoffzelle nach einem der vorhergehenden Ansprüche, **dadurch gekennzeichnet, dass** der metallische Träger (50) ein gesinterter Edelstahl ist.

4. Brennstoffzelle nach Anspruch 3, **dadurch gekennzeichnet, dass** die Porosität des Sintermetalls größer als 5 %, insbesondere 10 %, ist.

5. Brennstoffzelle nach Anspruch 3, **dadurch gekennzeichnet, dass** eine FeCrR-Legierung verwendet wird, wobei R für weitere metallische Komponenten steht.

6. Brennstoffzelle nach Anspruch 3, **dadurch gekennzeichnet, dass** Fe-Cr-Ti-Nb Legierungen verwendetet werden.

7. Brennstoffzelle nach Anspruch 6, **dadurch gekennzeichnet, dass** der planare Aufbau der einzelnen Brennstoffzellen zu einem dichtungsfreien Verbund des Brennstoffzellenstack führt.

8. Brennstoffzelle nach Anspruch 7, **dadurch gekennzeichnet, dass** Interkonnektoren zur elektrischen Verbindung einzelner Brennstoffzellen vorhanden ist.

9. Verwendung einer Reihenschaltung von Brennstoffzellen nach einem der vorhergehenden Ansprüche in einer Brennstoffzellenanlage.

## Claims

1. Planar high-temperature fuel cell with solid electrolyte, wherein the fuel cell consists of a cathode and anode as electrodes with the solid electrolyte layer disposed therebetween,
**characterised in that**
a porous metal structure (50) on the cathode side is used as the support for the functional layers (K, E, A, 100), wherein said porous metal structure (50) and the functional layers (K, E, A, 100) are of planar design and the solid electrolyte (E) consists of two layers with different materials, and wherein the solid electrolyte consists of ScSz and/or Ysz, **characterised in that** a diffusion-limiting layer made of LaCrO₃ is applied to the porous metal support (50) and that the cathode (K), electrolyte (E) and anode (A) are deposited thereon as functional layers.

2. Fuel cell according to one of the preceding claims, **characterised in that** the porous structure (50) of the metal support is permeable to the diffusion of the reactants or reaction products.

3. Fuel cell according to one of the preceding claims, **characterised in that** the metal support (50) is a sintered high-grade steel.

4. Fuel cell according to claim 3, **characterised in that** the porosity of the sintered metal is greater than 5 %, in particular 10 %.

5. Fuel cell according to claim 3, **characterised in that** an FeCrR alloy is used, where R stands for additional metal components.

6. Fuel cell according to claim 3, **characterised in that** Fe-Cr-Ti-Nb alloys are used.

7. Fuel cell according to claim 6, **characterised in that** the planar design of the individual fuel cells results in a seal-less sandwich construction of the fuel cell stack.

8. Fuel cell according to claim 7, **characterised in that** interconnectors for electrically connecting individual fuel cells are present.

9. Use of a series connection of fuel cells according to one of the preceding claims in a fuel cell system.

## Revendications

1. Pile à combustible plane à haute température, comprenant de l'électrolyte solide, la pile à combustible étant constituée d'une cathode et d'une anode comme électrodes avec la couche d'électrolyte solide entre elles,
**caractérisée en ce que**
comme support des couches (K, E, A, 100) fonctionnelles une structure (50) métallique poreuse est utilisée du côté de la cathode, la structure (50) métallique poreuse et les couches (K, E, A, 100) fonctionnelles étant constituées de manière plane et l'électrolyte (E) solide étant constituée de deux couches de matériaux différents, l'électrolyte (E) solide étant en ScSz et en YSz,
**caractérisée**
**en ce que**, sur le support (50) métallique poreux, est déposée une couche en LaCrO₃ limitant la diffusion et **en ce que** dessus sont disposées, comme couches fonctionnelles, la cathode (K), l'électrolyte (E) et l'anode (A).

2. Pile à combustible suivant l'une des revendications précédentes, **caractérisée en ce que** la structure (50) poreuse du support métallique est perméable pour la diffusion des réactifs ou des produits de réaction.

3. Pile à combustible suivant l'une des revendications précédentes, **caractérisée en ce que** le support (50) métallique est un acier fin fritté.

4. Pile à combustible suivant la revendication 3, **caractérisée en ce que** la porosité du métal fritté est plus grande que 5 %, notamment que 10 %.

5. Pile à combustible suivant la revendication 3, **caractérisée en ce qu'**un alliage de FeCrR est utilisé, R représentant d'autres constituants métalliques.

6. Pile à combustible suivant la revendication 3, **caractérisée en ce que** des alliages de Fe-Cr-Ti-Nb sont utilisés.

7. Pile à combustible suivant la revendication 6, **caractérisée en ce que** la structure plane des diverses piles à combustibles donne un assemblage sans garniture d'étanchéité de l'empilement de piles à combustible.

8. Pile à combustible suivant la revendication 7, **caractérisée en ce qu'**il y a des interconnecteurs pour la liaison électrique des diverses piles à combustible.

9. Utilisation d'un circuit série de piles à combustible suivant l'une des revendications précédentes dans une installation de piles à combustible.
